(19) Europäisches Patentamt

European Patent Office

Office européen des brevets

(11) **EP 1 125 890 A1**

(12) **EUROPÄISCHE PATENTANMELDUNG**

(43) Veröffentlichungstag:
22.08.2001 Patentblatt 2001/34

(51) Int Cl.⁷: **C01B 17/45**

(21) Anmeldenummer: 01102450.2

(22) Anmeldetag: 03.02.2001

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **11.02.2000 DE 10006247**

(71) Anmelder: **Solvay Fluor und Derivate GmbH**
**30173 Hannover (DE)**

(72) Erfinder:
• **Schulz, Alf**
**30900 Wedemark (DE)**
• **Rieland, Matthias**
**30559 Hannover (DE)**
• **Hausmann, Eckhard**
**30519 Hannover (DE)**

(74) Vertreter: **Lauer, Dieter, Dr.**
**Solvay Pharmaceuticals GmbH,**
**Hans-Böckler-Allee 20**
**30173 Hannover (DE)**

(54) **Disproportionierung von Sulfurylchlorfluorid**

(57) Sulfurylfluorid kann durch Disproportionierung von Sulfurylfluoridchlorid in der Gasphase an Aktivkohle hergestellt werden.

**Beschreibung**

Die Erfindung bezieht sich auf ein Verfahren zur Herstellung von Sulfurylfluorid durch Disproportionierung von Sulfurylchloridfluorid.

Sulfurylfluorid kann als Schädlingsbekämpfungsmittel eingesetzt werden.

Aufgabe der vorliegenden Erfindung ist es, ein neuartiges Verfahren zur Herstellung von Sulfurylfluorid anzugeben. Diese Aufgabe wird durch das in den Ansprüchen angegebene Verfahren gelöst.

Das erfindungsgemäße Verfahren sieht vor, Sulfurylfluorid dadurch herzustellen, daß Sulfurylchloridfluorid mit Aktivkohle in der Gasphase bei einer Temperatur von mindestens 130 °C kontaktiert wird. Dabei bildet sich Sulfurylfluorid sowie Schwefeldioxid und Chlor.

Bevorzugt arbeitet man bei einer Temperatur im Bereich von 180 bis 400 °C, insbesondere 180 bis 280 °C.

Das erhaltene Gasgemisch kann durch übliche Methoden, wie Durchleiten durch Wasser oder fraktionierte Verdampfung, aufgetrennt werden.

Vorteil der Erfindung ist es, daß Sulfurylchloridfluorid, das beispielsweise als Nebenprodukt bei der Fluorierung von Schwefeldioxid und Chlor mit Fluorwasserstoff anfällt, auf einfache Weise in $SO_2F_2$ überführt werden kann, ohne daß die bekannten Probleme der Deaktivierung des Katalysators bei der Hydrofluorierung von $SO_2FCl$ auftreten.

Das folgende Beispiel soll die Erfindung weiter erläutern, ohne sie in ihrem Umfang einzuschränken.

**Beispiel:** Herstellung von $SO_2F_2$ durch Disproportionierung von $SO_2FCl$

In einem mit einem Heizband beheizten Glasrohr mit einer Länge von 280 mm und einem Innendurchmesser von 20 mm wurden 39,83 g Aktivkohle (Shiragasi C2X4/6-2) eingefüllt und bei 200 °C ca. 2 Stunden lang unter Durchleiten von ca. 2 l/h $N_2$ ausgeheizt. Anschließend wurde mit gleicher Rotametereinstellung $SO_2FCl$ durchgeleitet. Die gaschromatographische Untersuchung ergab die vollständige Disproportionierung nach der Gleichung

$$2\ SOFCl \rightarrow SO_2F_2 + SO_2 + Cl_2.$$

**Patentansprüche**

1.    Verfahren zur Herstellung von Sulfurylfluorid unter Kontaktieren von Sulfurylfluoridchlorid mit Aktivkohle in der Gasphase bei einer Temperatur von mindestens 130 °C, wobei sich Sulfurylfluorid und $SO_2$ sowie $Cl_2$ bilden.

2.    Verfahren nach Anspruch 1, dadurch gekennzeichnet, daß man bei einer Temperatur im Bereich von 180 bis 400 °C kontaktiert.

3.    Verfahren nach Anspruch 2, dadurch gekennzeichnet, daß man bei einer Temperatur im Bereich von 180 bis 280 °C kontaktiert.

**Europäisches Patentamt**

**EUROPÄISCHER RECHERCHENBERICHT**

Nummer der Anmeldung

EP 01 10 2450

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | GMELIN: "AUS SCHWEFEL ODER SCHWEFELWASSERSTOFF" WEINHEIM, VERLAG CHEMIE,DE, Bd. SYSTEM NO. 57, 1966, Seiten 1729-1730, XP002130203 * das ganze Dokument * | 1 | C01B17/45 |
| A | US 3 320 030 A (BISIGNANI ALFRED G ET AL) 16. Mai 1967 (1967-05-16) * das ganze Dokument * | 1 | |
| A | US 3 403 144 A (FULLAM HAROLD T ET AL) 24. September 1968 (1968-09-24) * das ganze Dokument * | 1 | |

| RECHERCHIERTE SACHGEBIETE (Int.Cl.7) |
|---|
| C01B |

Der vorliegende Recherchenbericht wurde für alle Patentansprüche erstellt

| Recherchenort | Abschlußdatum der Recherche | Prüfer |
|---|---|---|
| MÜNCHEN | 26. Juni 2001 | Besana, S |

**ANHANG ZUM EUROPÄISCHEN RECHERCHENBERICHT**
**ÜBER DIE EUROPÄISCHE PATENTANMELDUNG NR.**

EP 01 10 2450

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-06-2001

| Im Recherchenbericht angeführtes Patentdokument | Datum der Veröffentlichung | Mitglied(er) der Patentfamilie | Datum der Veröffentlichung |
|---|---|---|---|
| US 3320030 A | 16-05-1967 | DE 1208296 B | |
| | | GB 1017323 A | 19-01-1966 |
| US 3403144 A | 24-09-1968 | KEINE | |

Für nähere Einzelheiten zu diesem Anhang : siehe Amtsblatt des Europäischen Patentamts, Nr. 12/82

EPO FORM P0461